# EUROPEAN PATENT SPECIFICATION

(11) **EP 1 546 452 B1**
(45) Date of publication and mention of the grant of the patent: **21.03.2007**
(21) Application number: 03763915.0
(22) Date of filing: 16.07.2003
(51) Int. Cl.: D21F 3/08, B01J 37/34

(54) **A METHOD FOR CONTROLLING THE PROPERTIES OF A SURFACE**
VERFAHREN ZUM GEZIELTEN EINSTELLEN DER EIGENSCHAFTEN EINER OBERFLÄCHE
PROCEDE DE REGULATION DES PROPRIETES D'UNE SURFACE

(30) Priority: 16.07.2002 FI 20021390
(43) Date of publication of application: 29.06.2005
(73) Proprietor: Millidyne OY, 33720 Tampere (FI)
(72) Inventor: KNUUTTILA, Jari, FIN-33500 Tampere (FI); SORSA, Petri, FIN-33340 Tampere (FI)
(74) Representative: Hakola, Unto Tapani
(86) International application number: PCT/FI2003/000569
(87) International publication number: WO 2004/007836

(56) References cited:
- EP-A1- 0 816 466
- EP-A1- 0 853 142
- EP-A1- 0 869 156
- EP-A1- 0 980 709
- WO-A1-98/41482

## Description

The invention relates to a method according to the appended claim 1 for adjusting the properties of a surface.

The peripheral surfaces of rotating members that control the travel of a continuous material web are typically susceptible for accumulation of various substances, which may result from the composition of the material web or the process.

For example on the roll surfaces of a paper machine there occurs a great deal of contamination of organic or inorganic origin that causes problems in the paper quality and in the runnability of the machine. On the other hand, on the central roll of the paper machine, the overall surface energy of the roll surface as well as its components have an important role in view of the release of the paper web. The runnability and the release of the web are also affected by the topography of the surface, the homogeneity of the surface and the nature of the contamination adhering on the surface. Previously attempts have been made to affect the properties of the surface by spraying chemicals on the surface of the roll.

It is an aim of the invention to eliminate the aforementioned drawbacks. According to the presented invention, the surface of a member that is in contact with a continuous material web, especially the roll surface of a paper machine, is coated by means of a photocatalytically active coating and the surface of the member is illuminated with a suitable source of UV radiation. Photocatalysis is a phenomenon in which chemical reactions take place on the surface of the material as a result of the influence of light. Titanium dioxide is one such photocatalytic material that is used as a thin transparent coating for example in cleansing of glass surfaces in building and automotive industry. The fact that the surfaces remain clean is based on the activation of titanium dioxide caused by the effect of UV light, wherein the organic substance on the surface is oxidized and the adhesion on the surface is reduced. Thereafter rain is sufficient for cleaning the surfaces. The same photocatalytic phenomenon also changes the surface energy of the surface strongly to a hydrophilic direction. Photocatalysis is discussed for example in the publications EP 869156 and 980709.

The photocatalytic activation of a roll surface in a paper machine has the following advantages:
- strongly oxidizing radicals and ions are produced on the surface by the action of hole-electron pairs, and they function as oxidizers of the substances adhering on the surface,
- the surface energy can be adjusted between hydrophilic and hydrophobic, for example the hydrophilicity of the surface can be increased, wherein the release of the paper web under the influence of draw will be facilitated.

In the following, the invention will be described in more detail with reference to the appended drawings, in which
- Fig. 1: shows an embodiment of the invention, a press section, in a side view,
- Fig. 2: shows a front view of the arrangement of Fig. 1 at the location of the roll, and
- Fig. 3: shows another embodiment of the method.

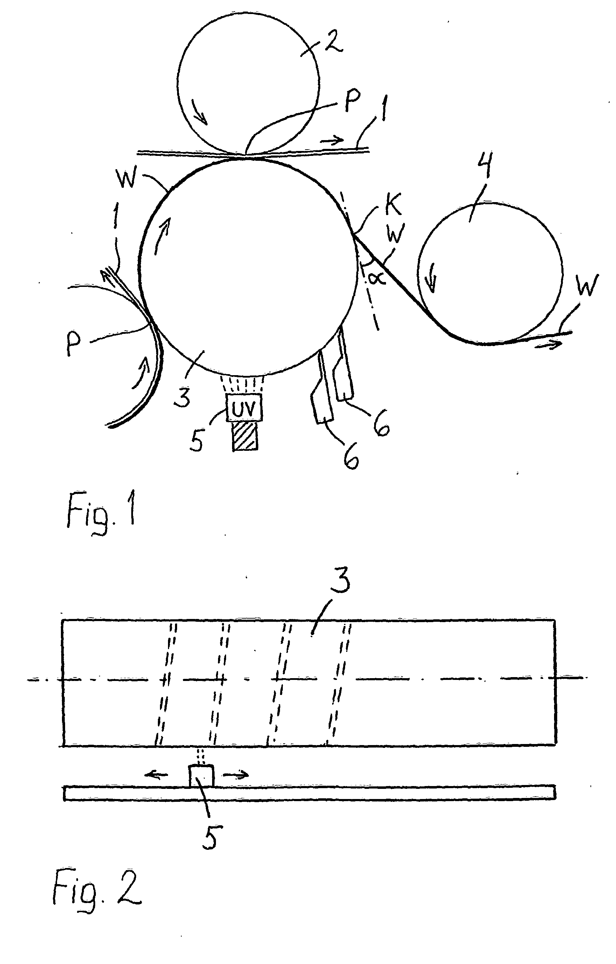

Fig. 1 shows the press section of a paper or paperboard machine, in which a press felt 1 is utilized to bring a moist paper or paperboard web W on a central roll 3 of the press via a first press nip P. The web W travels on the periphery of the rotating central roll 3 to a second press nip P that is formed between a guiding roll 2 and a second press felt 1 and the central roll 3. On the central roll 3 the web travels a certain distance on the surface of the roll after the nip P, whereafter it is released at point K and transferred in a free draw to a second guiding roll 4. The peripheral surface of the central roll 3, which is in contact with the web W within a sector of certain length, contains photocatalytically active material. The ways in which the surface of the roll can be equipped with this material will be discussed hereinbelow. At the location of the free sector of the roll 3, in other words at the location where the peripheral surface is not covered by the web W, there is a light source 5 that exerts electromagnetic radiation at a suitable wavelength on the peripheral surface of the roll 3 to accomplish the photocatalytic activation of the coating thereon. After the release point K of the web W, in the direction of rotation of the roll 3 and before the area of influence of the light source 5, there is one or several doctor blades 6 for cleaning the surface of the roll.

The light source activates the surface of the roll in such a manner that its hydrophilicity increases. This produces a thin water film on the surface of the roll, said moisture film facilitating the release of the paper web from the surface.

As can be seen in Fig. 1, the release angle from the roll 3 (angle α) and the location of the release point after the press nip P can be adjusted by adjusting the activating effect of the light source 5. In the geometry according to Fig. 1 the location of the release point and the release angle α are variables depending from each other, i.e. when the release point moves closer to the press nip P, the web is directed more in parallel with the tangent of the central roll 3, and the release angle α is reduced. In practice, the aim is to attain as small a release angle as possible, i.e. such a situation where the web leaves the roll 3 as tangentially as possible with respect to its periphery.

When the draw difference (the ratio of the peripheral speeds of the second guiding roll 4 to that of the central roll 3) is low, the release point K can be located close to the nip P, and the release angle α can be small, because the light source 5 makes the web to detach easily from the roll.
The coating can be activated by means of the light source, in the presented case with a source of UV radiation, before the web is introduced, and during the use, when the web is running and the roll is rotating, the UV radiation is exerted on the peripheral surface of the roll 3. The light source 5 is moved back and forth at a suitable speed in the longitudinal direction of the roll, i.e. parallelly to the rotation axis of the roll in the manner shown in Fig. 2, but it is at all times located within a certain sector of the rotating movement of the roll. Thus, the photocatalytic activation of the surface of the roll takes place during the rotation of the roll, when the surface of the roll moves past the light source. When the light source moves in the longitudinal direction of the roll, it does not have to cover the entire length of the roll at one time. When the speed of motion of the radiation source, the intensity or wavelength of the radiation source is adjusted, it is possible to affect the intensity or energy level of the UV radiation meeting the roll surface. When a suitable laser source is used for producing UV radiation, it is also possible to produce narrow "hydrophilic bands" (Fig. 2) on the surface of the roll that extend approximately in the direction of the periphery, or "hydrophilic spots" when a pulse-like light source, for example a laser is used. The radiation is exerted on a free surface of the roll, i.e. on such a sector that is not covered by the paper web, wherein the paper web is not positioned between the source of radiation and the roll surface.

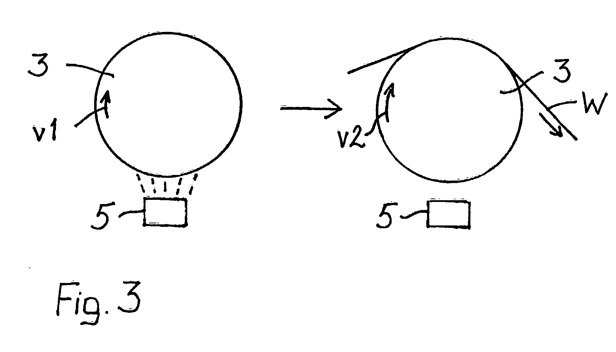

To activate the surface of the roll, it is also sufficient that the roll rotates at creeping speed, for example after a web break. In the production run, when the roll rotates at high speed, the light source can be switched off. The activation can thus be conducted at fixed intervals on the roll installed in the machine, and it does not have to be conducted during the production run. Thus, the roll does not have to be in contact with the web either, but the web may be absent (for example due to a web break). The term "rotating member that is in contact with a continuous moving material web" thus refers to such a member that can be detached from the material web for some time, wherein it can be maintained, for example to adjust the properties of the surface in the above-described manner in particular. When the activation has been finished, the material web can be brought in contact with the surface of the member, and the material web can thus travel via the surface of the rotating member within a certain sector. This alternative is shown in Fig. 3, in which on the left-hand side the roll 3 is activated as it rolls at a lower speed v1 without the material web, and on the right-hand side the roll 3 rotates at a higher speed v2 in contact with the web W.

As a photocatalytic coating, especially titanium dioxide and coating solutions based thereon can be employed. By means of the coating used especially in the central roll of the press section of the paper machine it is also possible to adjust the surface energy of the surface of the roll between hydrophobic and hydrophilic even during the run. Thus, it is possible to search for optimum conditions in view of the release of the web when the web is running, in other words reference is made to a so-called active coating. By means of radiation it is possible to increase the hydrophilicity, thus attaining a continuous water film on the surface that facilitates the release of the web. It is essential that the used photocatalytic coating is sufficiently wear-resistant, and/or the topography of the surface protects the coating from wear. The thermally sprayed coating used especially in the central rolls offers such a protective microporosity for example against the wearing effect of mechanical cleaning means, such as doctor blades. Thus, the photocatalytic surface is protected only at the bottom of the pores, but it is, however, exposed to the activating light directed on the surface of the roll. By controlling the extent of porosity it is thus possible to affect the effective photocatalytic surface area.

There are various alternatives for arranging the photocatalytically active material on the surface of the roll. The photocatalytic surface can be produced by thermal spraying or by treating the thermally sprayed surface with a photocatalytic coating. The material producing the photocatalysis can be in particle form, and thus bound to an organic, advantageously UV-stabilized matrix or inorganic matrix, or it can be a continuous film that is produced for example by means of sol-gel technique. In the latter case the film is produced either on a finished roll surface or immediately before the finish grinding. In the latter case the photocatalytic film is only located in the pores of the thermally sprayed or otherwise manufactured ceramic surface of the central roll, the amount and surface area of said pores thus determining the portion of the possible photocatalytic surface area.

In addition to the adjustment of the hydrophilicity of the surface, said photocatalytic surface is also suitable for keeping the surface clean. The photocatalytic surface is activated by the action of UV light, and it constantly oxidizes the organic impurities, such as fibres, resin and other pastes adhering on the surface, and originating for example from the paper or paperboard web travelling constantly on top of said surface. The adhered impurities are thereafter easily released, and harmful, thick layers are thus not formed. The reactions produced by UV light on a photocatalytically active surface include:
- generation of electron - positive hole pairs in the photocatalytically active material by the action of light having a sufficient energy level
- oxidation and reduction reactions produced by the holes and electrons with the donor molecules and acceptor molecules, respectively, on the surface, an example of the former being the formation of hydroxyl radicals and hydrogen ions (OH + H⁺) from water, and of the latter the formation of superoxide ions (OO⁻) from molecular oxygen
- oxidation of foreign substances by the action of positive holes, hydroxyl radicals and superoxide ions.

The photocatalytic coating can be single-phased, or it may contain photocatalytically active phases or particles. Thus, the matrix coating can be a thermally sprayed polymer coating, a polymer coating manufactured by the sol-gel method, or another polymer coating. In the case of a polymer coating the surrounding matrix must be protected with protective UV agents, or the photocatalytic particles are coated with a protective film that is ground off after the manufacture of the surface. Thus, the UV-active part does not affect the matrix to such an extent that it would oxidize the polymer.

The invention is not restricted solely to a particular photocatalytic material, but in the method it is possible to utilize any photocatalytic material in the structure of the surface, wherein light having a suitable energy level and exerted on the material causes changes in the properties of the surface. If the photocatalytic material is TiO₂, its crystal structure is advantageously anastatic, which has the highest photocatalytic activity. Furthermore, the invention is not restricted solely to UV light, but it is only necessary that the light directed actively to the surface has a sufficient energy level to produce the desired phenomena in the photocatalytically active material. Similarly, the term material web refers to all material webs travelling over the peripheral surface of a rotating member, the release of which material webs from the peripheral surface can be affected for example by activating the aforementioned surface photocatalytically.

## Claims

1. A method for adjusting the properties of a surface in a rotating member (3) that is in contact with a continuous moving material web (W), **characterized in that**
- the surface of the rotating member (3) that is in contact with the material web (W) contains photocatalytically active material,
- light is directed to the surface of the rotating member (3) that is in contact with the material web (W), said light having such energy that it is capable of activating the photocatalytically active material, and
- the activation of the photocatalytically active material causes oxidation of substances on the surface of the rotating member (3) and/or changes in the hydrophilic properties of the surface.

2. The method according to claim 1, **characterized in that** the activation is conducted when the rotating member (3) rotates at production speed in contact with the web.

3. The method according to claim 1, **characterized in that** the activation is conducted when the rotating member (3) rotates at a speed lower than the production speed, in contact with the web or without contacting the web.

4. The method according to claim 2, **characterized in that** the release of the continuous material web (W) from the surface of the rotating member (3) is controlled by the intensity of light.

5. The method according to claim 4, **characterized in that** the release point (K) or release angle (α) of the continuous moving material web (W) from the surface of the rotating member (3) is monitored, compared to a set value and the intensity of light is adjusted on the basis of the difference.

6. The method according to any of the preceding claims, **characterized in that** the rotating member (3) is the roll of a paper of paperboard machine, and the continuous material web (W) is a paper or paperboard web.

7. The method according to claim 6, **characterized in that** the rotating member (3) is a roll in the press section of a paper or paperboard machine.

8. The method according to any of the preceding claims, **characterized in that** the light is UV light.

9. The method according to any of the preceding claims, **characterized in that** a light source (5) producing the light is moved back and forth in the direction of the rotation axis of the rotating member (3).

## Patentansprüche

1. Verfahren zum Einstellen der Eigenschaften einer Oberfläche bei einem Drehkörper (3), der eine sich bewegende zusammenhängende Materialbahn (W) berührt, **dadurch gekennzeichnet, dass**
- die Oberfläche des Drehkörpers (3), die die Materialbahn (W) berührt, photokatalytisch-aktives Material aufweist,
- Licht auf die Oberfläche des Drehkörpers (3), der die Materialbahn (W) berührt, geleitet wird, wobei das Licht eine derartige Energie aufweist, dass es zum Aktivieren des photokatalytisch-aktiven Materials geeignet ist, und
- die Aktivierung des photokatalytisch-aktiven Materials eine Oxidation von Substanzen an der Oberfläche des Drehkörpers (3) und/oder Veränderungen bei den hydrophilen Eigenschaften der Oberfläche bewirkt.

2. Verfahren nach Anspruch 1, **dadurch gekennzeichnet, dass** die Aktivierung durchgeführt wird, wenn der Drehkörper (3) mit einer Produktionsgeschwindigkeit in Kontakt mit der Bahn sich dreht.

3. Verfahren nach Anspruch 1, **dadurch gekennzeichnet, dass** die Aktivierung durchgeführt wird, wenn der Drehkörper (3) mit einer Geschwindigkeit, die niedriger als die Produktionsgeschwindigkeit ist, in Kontakt mit der Bahn oder ohne Berühren der Bahn sich dreht.

4. Verfahren nach Anspruch 2, **dadurch gekennzeichnet, dass** die Ablösung der zusammenhängenden Materialbahn (W) von der Oberfläche des Drehkörpers (3) durch die Intensität des Lichtes gesteuert wird.

5. Verfahren nach Anspruch 4, **dadurch gekennzeichnet, dass** der Ablösungspunkt (K) oder der Ablösungswinkel (α) der zusammenhängenden, sich bewegenden Materialbahn (W) von der Oberfläche des Drehkörpers (3) überwacht wird, mit einem Wertesatz verglichen wird und die Intensität des Lichtes auf Basis der Differenz eingestellt wird.

6. Verfahren nach einem der vorstehenden Ansprüche, **dadurch gekennzeichnet, dass** der Drehkörper (3) die Rolle eines Papiers einer Pappmaschine ist und die zusammenhängende Materialbahn (W) eine Papier- oder Pappbahn ist.

7. Verfahren nach Anspruch 6, **dadurch gekennzeichnet, dass** der Drehkörper (3) eine Rolle in dem Druckabschnitt einer Papier- oder Pappmaschine ist.

8. Verfahren nach einem der vorstehenden Ansprüche, **dadurch gekennzeichnet, dass** das Licht UV-Licht ist.

9. Verfahren nach einem der vorstehenden Ansprüche, **dadurch gekennzeichnet, dass** eine Lichtquelle (5), die das Licht erzeugt, vor und zurück in die Richtung der Rotationsachse des Drehkörpers (3) bewegt wird.

## Revendications

1. Procédé destiné à ajuster les propriétés d'une surface dans un élément rotatif (3) qui est en contact avec une bande de matériau en mouvement continu (W), **caractérisé en ce que**
- la surface de l'élément rotatif (3) qui est en contact avec la bande de matériau (W) contient un matériau photocatalytiquement actif
- de la lumière est dirigée sur la surface de l'élément rotatif (3) qui est en contact avec la bande de matériau (W), ladite lumière ayant une énergie telle qu'elle est capable d'activer le matériau photocatalytiquement actif, et
- l'activation du matériau photocatalytiquement actif entraîne l'oxydation de substances sur la surface de l'élément rotatif (3) et/ou des changements dans les propriétés hydrophiles de la surface.

2. Procédé selon la revendication 1, **caractérisé en ce que** l'activation est conduite lorsque l'élément rotatif (3) tourne à une vitesse de production en contact avec la bande.

3. Procédé selon la revendication 1, **caractérisé en ce que** l'activation est conduite lorsque l'élément rotatif (3) tourne à une vitesse inférieure à la vitesse de production, en contact avec la bande ou sans contact avec la bande.

4. Procédé selon la revendication 2, **caractérisé en ce que** la libération de la bande de matériau continu (W) de la surface de l'élément rotatif (3) est régulée par l'intensité de lumière.

5. Procédé selon la revendication 4, **caractérisé en ce que** le point de libération (K) ou l'angle de libération (α) de la bande de matériau en mouvement continu (W) de la surface de l'élément rotatif (3) est surveillé, est comparé avec une valeur de consigne et l'intensité de lumière est ajustée sur la base de la différence.

6. Procédé selon l'une quelconque des revendications précédentes, **caractérisé en ce que** l'élément rotatif (3) est le rouleau d'un papier de machine à carton, et la bande de matériau continu (W) est une bande de papier ou de carton.

7. Procédé selon la revendication 6, **caractérisé en ce que** l'élément rotatif (3) est un rouleau dans la section des presses d'une machine à papier ou à carton.

8. Procédé selon l'une quelconque des revendications précédentes, **caractérisé en ce que** la lumière est une lumière UV.

9. Procédé selon l'une quelconque des revendications précédentes, **caractérisé en ce qu'**une source de lumière (5) produisant la lumière est déplacée vers l'avant et vers l'arrière en direction de l'axe de rotation de l'élément rotatif (3).
